# EUROPEAN PATENT APPLICATION

(11) **EP 3 187 617 A2**
(43) Date of publication of application: **05.07.2017**
(21) Application number: 16206291.3
(22) Date of filing: 22.12.2016
(51) Int. Cl.: C23C 4/10, C23C 4/134

(54) **ENVIRONMENTAL BARRIER COATINGS AND METHODS OF DEPOSITION THEREOF**

(30) Priority: 31.12.2015 US 201514985822
(71) Applicant: General Electric Company, Schenectady, NY 12345 (US)
(72) Inventor: GROSSMAN, Theodore Robert, Evendale, OH 45215 (US); MARGOLIES, Joshua Lee, Schenectady, NY 12345 (US)
(74) Representative: Pöpper, Evamaria

(57) **Abstract**

Methods of making an environmental barrier coating (EBC) for a substrate are provided that include providing an EBC feedstock comprising a rare earth element composition, in which a portion of the composition produces a volatile species during an air plasma spray coating process, providing a first additive that comprises or produces the volatile species during the air plasma spray coating process, injecting the EBC feedstock into a plasma spray plume during the air plasma spray coating process; and injecting the first additive into at least one of the plasma spray plume and a plasma torch nozzle during the air plasma spray coating process, in which the EBC has a composition that is substantially similar to the composition of the EBC feedstock.

## Description

Harsh operating conditions common to various physical or chemical systems can degrade and/or damage a surface of an article. An environmental barrier coating (EBC) is often deposited over the surface of the article to reduce or eliminate the degradation and/or damage. For example, one form of damage includes the degradation of a ceramic matrix composite (CMC) by water vapor in a gas stream, in which the water vapor reacts with silicon carbide to form silicon hydroxides.

One common process of depositing the EBC is through thermal spraying, such as air plasma spraying. During conventional air plasma spray coating, the EBC powdered feedstock is injected into the plasma spray plume, which is generated by ionizing the plasma gas that is fed into the plasma torch. Once injected into the plume, the EBC feedstock is melted and accelerated towards or transported to the substrate surface. Unfortunately, due to the amount of in-flight time and the operating temperatures of the plume, i.e., temperatures as high as 16,000°K, e.g., 4,000°K-8,000°K, the constituents of the EBC feedstock with relatively high vapor pressures volatize. As a consequence, the composition of the resulting EBC coating differs as compared to the EBC feedstock to such an extent that results in chemical and phase instability of the EBC, thereby, among other things, undesirably affecting its life cycle.

In an effort to minimize the compositional difference between the EBC feedstock and resulting EBC coating, prior attempts have included: (1) reactive spraying, which has the disadvantage of producing imperfect, mixed phase EBCs due to the unreacted constituents of the EBC feedstock; (2) inert gas shrouding, which does not prevent loss of high vapor pressure species from the EBC feedstock and therefore undesirably produces EBCs with a different compositional makeup than the EBC feedstock; and (3) tailoring the starting chemistry of the EBC feedstock to produce a post-spray composition which must be customized for different processing conditions since such conditions dictate the specific compositional makeup of the EBC feedstock that would be required to give the desired post-spray compositional makeup.

Therefore, there is a need for improved thermal spraying deposition methods that have the ability to produce EBCs having a composition that is substantially similar, if not the same, to that of the EBC feedstock.

In one aspect, methods of making an environmental barrier coating (EBC) for a substrate are provided. In one embodiment, the method includes providing an EBC feedstock comprising a rare earth element composition, in which a portion of the composition produces a volatile species during an air plasma spray coating process, providing a first additive that comprises or produces the volatile species during the air plasma spray coating process, injecting the EBC feedstock into a plasma spray plume during the air plasma spray coating process and injecting the first additive into at least one of the plasma spray plume and a plasma torch nozzle during the air plasma spray coating process, in which the EBC has a composition that is substantially similar to the composition of the EBC feedstock.

In one embodiment, the method includes injecting an EBC feedstock into a plasma spray plume to melt the EBC feedstock, in which the EBC feedstock comprises a rare earth element composition in which a portion of the composition produces a volatile species during melting, and depositing the melted EBC feedstock onto a surface of the substrate to form the EBC coating.

Improved deposition methods for EBC coatings have been developed, particularly an air plasma spray coating process that is capable of forming resulting EBCs having a composition that is substantially similar to the composition of the EBC feedstock. The methods and processes described herein generally involve injecting one or more additives into the plasma spray plume and/or the plasma torch nozzle during the air plasma spray coating process. In embodiments, the one or more additives comprise, or produce during the coating process, the volatile species of the EBC feedstock that are produced during the coating process. Therefore, it has been discovered that the injection of such an additive or additives during the coating process beneficially enables the formation of an EBC having a composition that corresponds more closely to the composition of the EBC feedstock as compared to an EBC that is formed by a comparable process that does not employ (inject) the additive or additives.

Volatilization of species of the EBC feedstock during the air plasma spraying process is one of the leading causes of the stoichiometric mismatch between the EBC feedstock and resulting EBC. The compositional mismatch between the EBC feedstock and resulting EBC undesirably causes chemical and phase instability within the resulting EBC. This instability decreases the life cycle of the EBC.

It has been discovered that when the plasma spray plume comprised the same volatile species that are produced by the EBC feedstock during the air plasma spray coating process, thermodynamic driving forces, which cause the volatilization of the high vapor pressure species of the EBC feedstock, is beneficially reduced or minimized. That is, the injection of an additive into the plasma spray plume, which either includes the volatile specie(s) or produces them within the plume, advantageously decreases volatilization during the spray coating process. As such, the methods and processes disclosed herein enable deposition of an EBC onto a substrate via air plasma spray coating in which the composition of the EBC is substantially similar to the composition of the EBC feedstock.

Several embodiments of the methods of making an EBC and processes for air plasma spray coating an EBC are described herein. Parameters of different steps, components, and features of the embodiments are described separately, but may be combined consistently with this description of claims, to enable other embodiments as well to be understood by those skilled in the art. Various terms used herein are likewise defined in the description which follows.

Values or ranges may be expressed herein as "about", from "about" one particular value, and/or to "about" another particular value. When such values or ranges are expressed, other embodiments disclosed include the specific value recited, from the one particular value, and/or to the other particular value. Similarly, when values are expressed as approximations, by use of the antecedent "about," it will be understood that the particular value forms another embodiment. It will be further understood that there are a number of values disclosed therein, and that each value is also herein disclosed as "about" that particular value in addition to the value itself. In embodiments, "about" can be used to mean, for example, within 10% of the recited value, within 5% of the recited value, or within 2% of the recited value.

In embodiments, the methods of making an EBC for a substrate generally include providing an EBC feedstock, providing a first additive, injecting the EBC feedstock into a plasma spray plume, and injecting the first additive into at least one of the plasma spray plume and a plasma torch nozzle, in which the EBC has a composition that is substantially similar to the composition of the EBC feedstock.

In one embodiment, the first additive is injected into the plasma spray plume. In another embodiment, the first additive is injected into the plasma torch nozzle, where the first additive mixes with the plasma gas feedstock to form the plasma spray plume.

In certain embodiments, the first additive is injected into the plasma spray plume and into the plasma torch nozzle. Such embodiments beneficially increase quality control of the process in the event of interruption of either injection point within the process. That is, in the event that injection into either the plasma spray plume or plasma torch nozzle ceases during the air plasma spray coating process, the remaining injection can beneficially maintain the volatile species concentration within the plasma spray plume, and therefore continue to form EBCs having a composition that is substantially similar to the composition of the EBC feedstock.

As used herein, the term "substantially similar" when used to describe the compositional relationship between the EBC feedstock and the EBC means that the composition of the EBC corresponds more closely to the composition of the EBC feedstock as compared to a different EBC formed by a comparable process that does not inject the additive. For example, the volatile species concentration of the EBC may be within about 10 mol%, about 9 mol%, about 8 mol%, about 7 mol%, about 6 mol%, about 5 mol%, about 4 mol%, about 3 mol%, or about 2 mol% of the volatile species concentration of the EBC feedstock.

In embodiments, the EBC feedstock comprises a rare earth element composition, in which a portion of the composition produces a volatile species during the air plasma spray coating process. Non-limiting examples of suitable EBC feedstock include mullite, rare earth monosilicates (RE₂SiO₅, where RE is a rare earth element), rare earth disilicates (RE₂Si₂O₇, where RE is a rare earth element or a combination of rare earth elements), rare earth oxides, rare earth aluminosilicates, and combinations thereof. In one embodiment, the EBC feedstock is YbₓY₍₂₋ₓ₎Si₂O₇, where x is 0 ≤ x ≤ 2

In embodiments where the EBC feedstock is a rare earth monosilicate (RE₂SiO₅), a rare earth disilicate (RE₂Si₂O₇), a rare earth aluminosilicate (RE aluminosilicate), or combinations thereof, the rare earth (RE) may be scandium, yttrium, dysprosium, holmium, erbium, thulium, ytterbium, lutetium, europium, gadolinium, terbium, or combinations thereof.

In some embodiments, the rare earth element of the EBC feedstock is selected from the group consisting of lanthanum, cerium, praseodymium, neodymium, promethium, samarium, europium, gadolinium, terbium, dysprosium, holmium, erbium, thulium, ytterbium, lutetium, and combinations thereof.

In embodiments, the first additive injected into the plasma spray plume spray and/or the plasma torch nozzle comprises or produces the same volatile species as the EBC feedstock during the air plasma spray coating process. In some embodiments, the concentration of the volatile species present in the first additive, or produced by the first additive, is from about 0.01 ppb to about 10 ppm. In one embodiment, the concentration is from about 0.01 ppm to about 1 ppm. In another embodiment, the concentration is from about 0.1 ppm to about 10 ppm. In yet another embodiment, the concentration is from about 1 ppm to about 10 ppm.

In some embodiments, the first additive is injected into the plasma spray plume in the form of a powder. Non-limiting examples of suitable powdered additives include metallic silicon, silicon dioxide (silica), and a combination thereof. In one embodiment, the first additive has a particle size from about 0.005 microns to about 5 microns. In another embodiment, the first additive has a particle size from about 1 micron to about 5 microns.

In other embodiments, the first additive is injected into the plasma spray plume and/or plasma torch nozzle in the form of a gas. Non-limiting examples of suitable gaseous additives includes silanes, e.g., SiₙH₂ₙ₊₂, where n≥1, halosilanes, e.g., chlorosilane or tetrafluorosilane, organosilanes, e.g., methysilane and chlorodimethylsilane, heterosilanes, e.g., organoheterosilanes, and combinations thereof.

In some embodiments, the method may further include providing a second additive and injecting the second additive into the plasma spray plume and/or the plasma torch nozzle. In such embodiments, the first additive can, independently of the second additive, be injected into the plasma spray plume and/or the plasma torch nozzle. For example, in some embodiments, the first additive may be injected into the plasma spray plume and the second additive may be injected into the plasma torch nozzle, or vice versa.

In certain embodiments where the method includes injecting a first additive and a second additive, the first additive and the second additive are the same. In other embodiments, the first additive and the second additive are different.

In embodiments, the second additive injected into the plasma spray plume and/or the plasma torch nozzle comprises or produces the same volatile species as the EBC feedstock during the air plasma spray coating process. In some embodiments, the concentration of the volatile species present in the second additive, or produced by the second additive, is from about 0.01 ppb to about 10 ppm. In one embodiment, the concentration is from about 0.01 ppm to about 1 ppm. In another embodiment, the concentration is from about 0.1 ppm to about 10 ppm. In yet another embodiment, the concentration is from about 1 ppm to about 10 ppm.

In some embodiments, the second additive is injected into the plasma spray plume in the form of a powder. Non-limiting examples of suitable powdered additives include metallic silicon, silicon dioxide (silica), and a combination thereof. In one embodiment, the second additive has a particle size from about 0.005 microns to about 5 microns. In another embodiment, the second additive has a particle size from about 1 micron to about 5 microns.

In other embodiments, the second additive is injected into the plasma spray plume and/or plasma torch nozzle in the form of a gas. Non-limiting examples of suitable gaseous additives includes silanes, e.g., SiₙH₂ₙ₊₂, where n≥1, halosilanes, e.g., chlorosilane and tetrafluorosilane, organosilanes, e.g., methysilane and chlorodimethylsilane, heterosilanes, e.g., organoheterosilanes, and combinations thereof.

In embodiments, the EBC is thermally sprayed onto a substrate. In a preferred embodiment, the EBC is deposited onto a substrate via an air plasma spray coating process. The processes described herein for air plasma spray coating an EBC onto a substrate generally include injecting an EBC feedstock into a plasma spray plume to melt the EBC feedstock, injecting a first additive into at least one of the plasma spray plume and the plasma torch nozzle, and depositing the melted EBC feedstock onto a surface of the substrate to form the EBC coating, in which the EBC has a composition that is substantially similar to the composition of the EBC feedstock.

In some embodiments, the substrate is formed of a ceramic, an alloy, an intermetallic, an organic material or materials, or combinations thereof. In one embodiment, the substrate is a ceramic matrix composite (CMC), e.g., a silicon carbide based CMC, a silicon nitride based CMC, or an oxide based CMC, such as alumina. In another embodiment, the substrate is a nickel-based alloy.

In some embodiments, the first additive is injected into the plasma spray plume and/or the plasma torch nozzle of a standard air plasma spray console. In one embodiment, the first additive is injected into the plasma spray plume via the same conduit of the spray console used for the injection of the EBC feedstock. In such embodiment, the first additive may be injected into the plasma spray plume in the form of a powder, or alternatively, in the form of a gas. In another embodiment, the first additive is injected in the form of a gas into the plasma torch nozzle of the spray console in the form of a gas via the same gas conduit used for injection of the plasma gas feedstock, e.g., argon, nitrogen, hydrogen, helium, oxygen, air, and/or water, or one of the constituents of the plasma gas feedstock, that is used to produce the plasma spray plume. It should be noted that the foregoing injection description with respect to the first additive is also applicable to instances where a second additive is also injected into the plasma spray plume and/or the plasma torch nozzle.

In other embodiments, the first additive is injected into the plasma spray plume and/or the plasma torch nozzle of a modified air plasma spray console. In one embodiment, the first additive is injected into the plasma spray plume via a secondary conduit added to the spray console, the secondary conduit being separate and independent from the conduit used for the injection of the EBC feedstock. In such embodiment, the first additive may be injected into the plasma spray plume in the form of a powder, or alternatively, in the form of a gas. In another embodiment, the first additive is injected in the form of a gas into the plasma torch nozzle of the spray console via a secondary gas conduit that is added to the spray console, the secondary gas conduit being separate and independent from the gas conduit(s) used for injection of the plasma gas feedstock, or its constituents, that is used to produce the plasma spray plume. It should be noted that the foregoing injection description with respect to the first additive is also applicable to instances where a second additive is also injected into the plasma spray plume and/or the plasma torch nozzle.

The environmental barrier coatings and methods of deposition may be further understood with the following non-limiting examples.

### EXAMPLES

### Example 1: Powdered Additive

A plasma gas feedstock, Argon, is injected into the plasma torch nozzle is injected into the plasma torch nozzle of an air plasma spray console at a rate of 20 to 200 SLPM and then ionizes within the nozzle of the air plasma spray console to form the plasma spray plume, in which the operating temperature of the plasma plume is 10,000°K. An EBC feedstock, RE₂Si₂O₇, is then injected at a rate of 0.5 to 5 kg/hr into the plasma spray plume. A powdered additive, metallic silicon having a particle size from about 1 micron to about 5 microns, is also injected at a rate of 5 to 50 mg/hr into the plasma spray plume. Once injected into the plasma spray plume, the EBC feedstock melts and thereafter deposits onto a surface of a substrate, a silicon carbide based CMC, to form an EBC.

### Example 2: Gaseous Additive

A plasma gas feedstock, Argon, is injected into the plasma torch nozzle of an air plasma spray console at a rate of 20 to 200 SLPM and then ionizes within the nozzle to form the plasma spray plume, in which the operating temperature of the plasma spray plume is 10,000°K. A gaseous additive, silane, is also injected into the plasma torch nozzle at a rate between 0.02 to 0.2 cc/min. An EBC feedstock, RE₂Si₂O₇, is injected at a rate between 0.5 to 5 kg/hr into the plasma spray plume. Once injected into the plasma spray plume, the EBC feedstock melts and thereafter deposits onto a surface of a substrate, a silicon carbide based CMC, to form an EBC.

### Example 3: Gaseous Additive and Powdered Additive

A plasma gas feedstock, Argon, is injected into the plasma torch nozzle of an air plasma spray console at a rate of 20 to 200 SLPM and then ionizes within the nozzle to form the plasma spray plume, in which the operating temperature of the plasma spray plume is 10,000°K. A gaseous additive (first additive), silane, is also injected into the plasma torch nozzle at a rate between 0.02 to 0.2 cc/min. An EBC feedstock, RE₂Si₂O₇, is injected at a rate between 0.5 to 5 kg/hr into the plasma spray plume. A powdered additive (second additive), metallic silicon having a particle size from about 1 micron to about 5 microns, is injected at a rate of 0.5 to 5 mg/hr into the plasma spray plume. Once injected into the plasma spray plume, the EBC feedstock melts and thereafter deposits onto a surface of a substrate, a silicon carbide based CMC, to form an EBC.

## Claims

1. A method of making an environmental barrier coating (EBC) for a substrate, the method comprising:
providing an EBC feedstock comprising a rare earth element composition, wherein a portion of the composition produces a volatile species during an air plasma spray coating process;
injecting the EBC feedstock into a plasma spray plume during the air plasma spray coating process;
providing a first additive that comprises or produces the volatile species during the air plasma spray coating process; and
injecting the first additive into at least one of the plasma spray plume and a plasma torch nozzle during the air plasma spray coating process.

2. The method of claim 1, wherein the substrate is a ceramic matrix composite.

3. The method of claim 1 or claim 2, wherein the EBC feedstock is selected from the group consisting of a rare earth monosilicate, a rare earth disilicate, a rare earth oxide, a rare earth aluminosilicate, and combinations thereof.

4. The method of one of the foregoing claims, wherein the rare earth element is selected from the group consisting of scandium, yttrium, dysprosium, holmium, erbium, thulium, ytterbium, lutetium, europium, gadolinium, terbium, and combinations thereof or the rare earth element is selected from the group consisting of lanthanum, cerium, praseodymium, neodymium, promethium, samarium, europium, gadolinium, terbium, dysprosium, holmium, erbium, thulium, ytterbium, lutetium, and combinations thereof.

5. The method of one of the foregoing claims, wherein the first additive is injected into the plasma spray plume in the form of a powder.

6. The method of one of the foregoing claims, wherein the concentration of the volatile species present in or produced by the first additive is from about 0.01 ppb to about 10 ppm.

7. The method of one of the foregoing claims, wherein the first additive is metallic silicon, silicon dioxide, or a combination thereof.

8. The method of one of the claims 1 to 4, 6, or 7, wherein the first additive is injected into at least one of the plasma spray plume and the plasma torch nozzle in the form of a gas.

9. The method of one of the foregoing claims, wherein the first additive is selected from the group consisting of a silane, a halosilane, an organosilane, a heterosilane, and combinations thereof.

10. The method of one of the foregoing claims, further comprising:
providing a second additive that comprises or produces the volatile species during the air plasma spray coating process; and
injecting the second additive into at least one of the plasma spray plume and a plasma torch nozzle during the air plasma spray coating process.

11. The method of one of the foregoing claims, wherein
injecting the EBC feedstock into the plasma spray plume serves to melt the EBC feedstock, and
depositing the melted EBC feedstock onto a surface of the substrate to form the EBC coating.
